# EUROPÄISCHE PATENTSCHRIFT

(11) **EP 3 447 819 B1**
(45) Veröffentlichungstag und Bekanntmachung des Hinweises auf die Patenterteilung: **23.03.2022**
(21) Anmeldenummer: 17187769.9
(22) Anmeldetag: 24.08.2017
(51) Int. Cl.: H01M 50/119, H01M 50/15, H01M 50/159, H01M 50/171, H01M 50/186, H01M 10/04, H01M 50/103

(54) **SEKUNDÄRE MINIATURBATTERIE MIT METALLISCHEM GEHÄUSE UND VERFAHREN ZU IHRER HERSTELLUNG**
SECONDARY MINIATURE BATTERY WITH METAL HOUSING AND METHOD FOR ITS MANUFACTURING
BATTERIE MINIATURE SECONDAIRE POURVUE DE CHEMISE MÉTALLIQUE ET PROCÉDÉ DE FABRICATION D'UNE TELLE BATTERIE

(43) Veröffentlichungstag der Anmeldung: 27.02.2019
(73) Patentinhaber: VARTA Microbattery GmbH, 73479 Ellwangen Jagst (DE)
(72) Erfinder: Gaugler, Andreas, 73479 Ellwangen (DE); Holl, Konrad, 73434 Aalen (DE); Wroblewski, Mario, 73434 Aalen-Dewangen (DE)
(74) Vertreter: Ostertag & Partner Patentanwälte mbB

(56) Entgegenhaltungen:
- EP-A1- 0 895 296
- JP-A- S5 795 064
- JP-A- S6 240 153
- JP-A- H03 112 052
- US-A- 4 263 380

## Beschreibung

Die nachfolgend beschriebene Erfindung betrifft die Herstellung einer sekundären Miniaturbatterie mit einer Kapazität < 1000 mAh. Die Miniaturbatterie umfasst ein prismatisch ausgebildetes Metallgehäuse aus zwei metallischen Gehäuseteilen. Zwischen den zwei metallischen Gehäuseteilen ist in einem Dichtungsbereich eine umlaufende Dichtung angeordnet, die die Gehäuseteile elektrisch voneinander isoliert.

Der Begriff "Batterie" meinte ursprünglich mehrere in Serie geschaltete galvanische Zellen. Heute werden jedoch auch einzelne galvanische Zellen (Einzelzellen) häufig als Batterie bezeichnet. Dies wird auch vorliegend so gehandhabt.

Miniaturbatterien mit einer Kapazität < 1000 mAh liegen häufig in Knopfzellenform vor. Eine Knopfzelle weist üblicherweise ein Gehäuse auf, dessen Höhe kleiner als sein Durchmesser ist und das eine positive und eine negative Elektrode einschließt. In der Regel weist das Gehäuse eine zylindrische Geometrie auf. In dem Gehäuse können unterschiedliche elektrochemische Systeme enthalten sein. Sehr verbreitet sind Knopfzellen auf Basis von Zink/Luft, Zink/MnO2 und Nickel/Zink. Auch sekundäre Systeme, z.B. auf Basis von Nickel/Metallhydrid, Nickel/Cadmium oder auf Basis von Lithium-Ionen, sind sehr verbreitet.

Das Gehäuse von Knopfzellen besteht in aller Regel aus zwei Gehäuseteilen, dem Zellenbecher und dem Zellendeckel, zwischen denen eine elektrisch isolierende Dichtung angeordnet ist. In der Regel steht der Zellenbecher in elektrischer Verbindung mit der positiven Elektrode und ist entsprechend positiv gepolt. Der Zellendeckel steht üblicherweise in elektrischer Verbindung mit der negativen Elektrode und ist entsprechend negativ gepolt. Die Dichtung soll einen elektrischen Kontakt zwischen den entgegengesetzt gepolten Gehäusehalbteilen unterbinden. Darüber hinaus soll sie einem Entweichen und auch einem Eindringen von Flüssigkeit oder Feuchtigkeit aus dem oder in das Gehäuse entgegenwirken.

Miniaturbatterien werden für eine Vielzahl von portablen elektronischen Kleingeräten benötigt. Der Einsatz von Miniaturbatterien in Knopfzellenform ist aufgrund ihrer zylindrischen Form aber häufig nicht optimal. Viele Kleingeräte haben ein prismatisches Design, der für die Miniaturbatterie zur Verfügung stehende Innenraum weist daher auch eine prismatische Geometrie auf. Die bei Verwendung zylindrischer Knopfzellen entstehenden Totvolumina können nur schwer ausgenutzt werden. Daher werden an Stelle von Knopfzellen oft auch Pouchzellen verwendet. Pouchzellen enthalten mindestens einen Verbund aus flachen Elektroden- und Separatorschichten. Dieser wird von einem aus zwei flexiblen Gehäusefolien gebildeten Gehäuse umschlossen. Als Gehäusefolien eignen sich insbesondere mehrlagige Verbundfolien mit einer beidseitig von Kunststofflagen umgebenen Lage aus Aluminium. Ein Beispiel hierfür ist eine mehrlagige Verbundfolie mit der Sequenz Polyamid / Aluminium / Polyethylen. Zur Bildung des Gehäuses werden die Gehäusefolien an ihren Rändern miteinander verbunden, beispielsweise durch Verklebung oder Verschweißung. Hierbei entsteht allerdings ein relativ breiter Siegelbereich, der zu Lasten der volumetrischen Energiedichte von Pouchzellen geht.

Wünschenswert wären daher Knopfzellen mit "prismatischem Design", also beispielsweise quaderförmige Knopfzellen. Diese könnten die in portablen elektronischen Kleingeräten zur Verfügung stehenden Volumina optimal ausnutzen. Die Herstellung solcher Knopfzellen scheiterte jedoch bislang an produktionstechnischen Problemen. Als kritischer Punkt erwies sich insbesondere ihr flüssigkeitsdichter Verschluss. Klassisch werden Knopfzellen bekanntlich durch einen Bördelprozess verschlossen, bei dem die Gehäuseteile einer Knopfzelle formschlüssig miteinander verbunden werden. In der Regel wird dabei ein Zellendeckel mitsamt einer elektrisch isolierenden umlaufenden Dichtung in einen Zellenbecher eingeschoben, dessen Rand anschließend radial nach innen umgebogen wird. Hierbei wird die Dichtung gegen den Zellendeckel gepresst, woraus der gewünschte flüssigkeitsdichte Verschluss resultiert. Allerdings wirken bei diesem Vorgang erhebliche axiale mechanische Kräfte auf die Gehäuseteile. Während zylindrische Gehäuseteile auch bei geringen Wandstärken solchen Kräften gegenüber sehr stabil sind, treten bei Gehäuseteilen mit nicht gebogenen Seitenwänden in Teilbereichen leicht unerwünschte Deformationen auf.

Aus der JP H03-112052 A ist eine prismatische Batterie mit einem versiegelten metallischen Batteriegehäuse bekannt. Zur Versiegelung des Gehäuses werden die Gehäuseteile an den Kontaktflächen mit einem flüssigen organischen oder anorganischen Haftvermittler (beispielsweise ein Harz), in welchem schmelzbare Klebstoffpartikel mit einem Teilchendurchmesser von 3 bis 10 µm dispergiert sind, vorbehandelt. Die Gehäuseteile werden anschließend im Dichtungsbereich thermisch behandelt wobei die Klebstoffpartikel aufschmelzen. Beim Abkühlen bewirken sie die benötigte Versiegelung.

Aus der U 4263380 A ist ein Verfahren zur Herstellung besonders lecksicherer Knopfzellen bekannt. Unter anderem ist beschrieben, einen Dichtungsbereich durch Aufschmelzen mittels Induktion zu bilden.

Aus der JP S62-40153 A ist ein Verfahren zum Verschließen von Batteriegehäusen bekannt. Im Rahmen dieses Verfahrens wird ein Schmelzklebstoff in Form eines Spritzgussteils vorgelegt, welches dann mittels Ultraschall oder mit Hilfe eines Heizdrahts mit den Gehäuseteilen verschmolzen wird.

Aus der EP 0895296 A1 ist ein Induktionsprozess zum Versiegeln einer Batterie bekannt. Hierbei werden mittels eines Hochfrequenz-Induktionserwärmers überlappende Kanten eines Batteriegehäuses aus einem laminierten Verbundmaterial bestehend aus einer Metallfolie und einer Kunststoffschicht wärmeversiegelt.

Aus der JP S57-95064 A ist es bekannt, eine Dichtung unter Einsatz induktiver Energie mit einem Knopfzellendeckel zu verschweißen, bevor der Deckel mitsamt der Dichtung in einen Gehäusebecher eingeschoben wird. Geschlossen wird das Gehäuse dann durch einen klassischen Bördelprozess.

Der vorliegenden Erfindung lag die Aufgabe zugrunde, eine Miniaturbatterie bereitzustellen, die den räumlichen Anforderungen in portablen elektronischen Kleingeräten besser gerecht wird als die bekannten Knopf- und Pouchzellen.

Zur Lösung dieser Aufgabe schlägt das Verfahren mit den in Anspruch 1 genannten Merkmalen vor.

Das Verfahren gemäß der vorliegenden Erfindung stellt eine sekundäre Miniaturbatterie mit einer Kapazität < 1000 mAh mit den folgenden Merkmalen bereit:
- Die Batterie umfasst ein Metallgehäuse aus zwei metallischen Gehäuseteilen.
- Das Metallgehäuse ist prismatisch ausgebildet.
- Zwischen den zwei metallischen Gehäuseteilen ist in einem Dichtungsbereich eine umlaufende Dichtung angeordnet, die die Gehäuseteile elektrisch voneinander isoliert.

Das aus den zwei Gehäuseteilen gebildete Metallgehäuse umfasst in bevorzugten Ausführungsformen ein Bodenteil, ein dazu parallel angeordnetes Deckelteil, das bevorzugt die gleiche Größe und Form wie das Bodenteil aufweist oder geringfügig kleiner ist, sowie n, das Bodenteil und das Deckelteil verbindende Seitenteile, wobei n ≥ 3, bevorzugt 4 bis 8, ist. Zusammen bilden das Boden- und das Deckelteil sowie die Seitenteile einen geschlossenen Innenraum, in dem Funktionsteile der Batterie, insbesondere mindestens eine positive und mindestens eine negative Elektrode sowie mindestens ein die Elektroden trennender Separator, gegebenenfalls auch zwei oder mehr seriell oder parallel zueinander geschaltete Einzelzellen, angeordnet sind.

Als sekundäre Batterie ist die Miniaturbatterie wiederaufladbar. Besonders bevorzugt ist in dem Innenraum mindestens eine Einzelzelle auf Lithium-Ionen-Basis angeordnet. Die Elektroden von Einzelzellen auf Lithium-Ionen-Basis liegen bevorzugt schichtförmig vor. Gemeinsam mit mindestens einem schichtförmigen Separator bilden sie einen Verbund aus flachen Elektroden- und Separatorschichten. Besonders bevorzugt umfasst die Miniaturbatterie mindestens einen solchen Verbund. Der Verbund kann spiralförmig aufgewickelt sein. Vorliegend ist es allerdings in den meisten Ausführungsformen bevorzugt, dass die Elektroden und der mindestens eine Separator flach aufeinander gestapelt sind. Gegebenenfalls können in dem Innenraum auch mehrere Einzelzellen auf Lithium-Ionen-Basis, die jeweils aus schichtförmigen, flach aufeinander gestapelten Elektroden und Separatoren bestehen, aufeinander gestapelt vorliegen.

Die Elektroden der Einzelzelle auf Lithium-Ionen-Basis umfassen bevorzugt metallische Stromkollektoren, die meist in Form von Folien, Netzen, Gittern, Schäumen, Vliesen oder Filzen vorliegen. Im Fall der positiven Elektrode werden als Stromkollektoren meist Netze oder Folien aus Aluminium, beispielsweise aus Aluminiumstreckmetall oder aus einer Aluminiumfolie, eingesetzt. Auf der Seite der negativen Elektrode werden als Stromkollektoren meist Netze oder Folien aus Kupfer verwendet.

Zur Herstellung der schichtförmigen Elektroden werden aus meist pastenförmigen Zusammensetzungen, die ein geeignetes elektrochemisch aktives Material (kurz "Aktivmaterial") umfassen, auf den Stromkollektoren dünne Elektrodenfilme gebildet. Für die Elektroden einer Einzelzelle auf Lithium-Ionen-Basis geeignete Aktivmaterialien müssen Lithium-Ionen aufnehmen und wieder abgeben können, die beim Laden bzw. Entladen von der negativen zur positiven Elektrode (und umgekehrt) wandern.

Als für negative Elektroden von Einzelzellen auf Lithium-Ionen-Basis geeignete Aktivmaterialien kommen insbesondere graphitischer Kohlenstoff oder zur Interkalation von Lithium befähigte nichtgraphitische Kohlenstoffmaterialien in Frage. Weiterhin können auch metallische und halbmetallische Materialien, die mit Lithium legierbar sind, zum Einsatz kommen. So sind beispielsweise die Elemente Zinn, Antimon und Silizium in der Lage, mit Lithium intermetallische Phasen zu bilden. Insbesondere können die kohlenstoffbasierten Aktivmaterialien mit den metallischen und/oder halbmetallischen Materialien auch kombiniert werden.

Für die positiven Elektroden eignet sich insbesondere Lithiumkobaltoxid (LCO) mit der Summenformel LiCoO₂, Lithiumnickelmangancobaltoxid (NMC) mit der Summenformel LiNiₓMn_{y}CO_{z}O₂, Lithiummanganspinell (LMO) mit der Summenformel LiMn2O4, Lithiumeisenphosphat (LFP) mit der Summenformel LiFePO₄ oder Lithiumnickelcobaltaluminiumoxid mit der Summenformel LiNiₓCo_{y}Al_{z}O₂ (NCA). Auch Mischungen der genannten Materialien können eingesetzt werden.

In dem Metallgehäuse enthaltene Elektroden sind elektrisch mit den Gehäuseteilen verbunden. Hierzu können die Elektroden unmittelbar an den Gehäuseteilen anliegen. In der Regel ist es allerdings bevorzugt, wenn die elektrische Verbindung über einen separaten elektrischen Leiter hergestellt ist. Die jeweiligen Leiter sind bevorzugt mit den jeweiligen Gehäuseteilen durch Verschweißung verbunden. Elektrodenseitig können die Leiter an die Stromkollektoren angeschweißt sein. Natürlich kann es sich bei Leitern grundsätzlich auch um nicht mit Elektrodenmaterial bedeckte Teile der jeweils verwendeten Stromkollektoren handeln.

Besonders bevorzugt umfasst das Metallgehäuse ein rechteckiges Bodenteil, vier im rechten Winkel dazu angeordnete Seitenteile und ein Deckelteil, das im Wesentlichen die gleiche Form und Größe wie das Bodenteil aufweist. Mit anderen Worten, n ist hier 4 und das Gehäuse ist bevorzugt quaderförmig ausgebildet.

In einer weiteren besonders bevorzugten Ausführungsform umfasst das Metallgehäuse ein fünfeckiges Bodenteil, fünf im rechten Winkel dazu angeordnete Seitenteile und ein Deckelteil, das im Wesentlichen die gleiche Form und Größe wie das Bodenteil aufweist. Mit anderen Worten, n ist hier 5 und das Gehäuse ist als fünfseitiges Prisma ausgebildet.

In einer weiteren besonders bevorzugten Ausführungsform umfasst das Metallgehäuse ein sechseckiges Bodenteil, sechs im rechten Winkel dazu angeordnete Seitenteile und ein Deckelteil, das im Wesentlichen die gleiche Form und Größe wie das Bodenteil aufweist. Mit anderen Worten, n ist hier 6 und das Gehäuse ist als sechsseitiges Prisma ausgebildet.

Besonders bevorzugt weisen die beiden Gehäuseteile die gleiche Grundform auf. Beispielsweise können beide Gehäuseteile als Becher mit rechteckiger Grundfläche ausgebildet sein, beispielsweise einen quadratischen Boden sowie vier sich daran anschließende rechteckige Seitenwände von jeweils identischer Größe aufweisen, wobei die Seitenwände nach unten hin durch den jeweiligen Becherboden und nach oben hin durch einen umlaufenden Öffnungsrand mit quadratischer Geometrie begrenzt werden.

Um die beiden Gehäuseteile zusammenfügen zu können, sind ihre Dimensionen bevorzugt derart aufeinander abgestimmt, dass das kleinere der Gehäuseteile mit dem umlaufenden Öffnungsrand voran in das andere eingeschoben werden kann. Bei einem auf diese Weise zusammengefügten Gehäuse überlappen die Seitenwände der Gehäuseteile und bilden gemeinsam die in diesem Fall doppelwandigen Seitenteile des Metallgehäuses. Die quadratischen Böden der Gehäuseteile bilden das Boden- und das Deckelteil des Metallgehäuses. Die Seitenwände der Gehäuseteile schließen einen umlaufenden Spalt ein. Bei diesem handelt es sich um eine bevorzugte Ausführungsform des Dichtungsbereichs, in dem die umlaufende Dichtung angeordnet ist.

Das Bodenteil, das Deckelteil und die Seitenteile des Metallgehäuses weisen jeweils eine in den Innenraum des Gehäuses weisende Innenseite und eine in die entgegengesetzte Richtung weisende Außenseite auf. Gleiches gilt für die Böden und Seitenwände der beiden Gehäuseteile.

Die Gehäuseteile und damit das Metallgehäuse sind bevorzugt aus metallischen Materialien wie vernickeltem Stahl oder Blech gefertigt. Weiterhin geeignet sind insbesondere auch Trimetalle, beispielsweise mit der Abfolge Nickel, Stahl und Kupfer (von außen nach innen).

Wenn es sich bei der Batterie um eine Batterie auf Lithium-Ionen-Basis handelt, dann kann es auch bevorzugt sein, dass das elektrisch mit der positiven Elektrode verbundene Gehäuseteil aus Aluminium oder aus einer Aluminiumlegierung besteht.

Die Miniaturbatterie zeichnet sich besonders bevorzugt durch die folgenden Merkmale aus:
- Der kürzeste Abstand zwischen einem Punkt auf der Außenseite des Bodenteils und einem Punkt auf der Außenseite des Deckelteils ist bevorzugt ein Wert von 2 mm bis 20 mm.
- Der maximale Abstand zweier Punkte auf der Außenseite der Seitenteile ist bevorzugt ein Wert von 5 mm bis 80 mm.
- Die Dicke der Gehäuseteile liegt bevorzugt im Bereich von 50 µm bis 1 mm.

Das Metallgehäuse ist bevorzugt bördelfrei verschlossen. In Übereinstimmung mit den vorhergehenden Ausführungen bedeutet dies, dass die Gehäuseteile nicht mittels eines Formschlusses miteinander verbunden sind. Bevorzugt besteht zwischen den Gehäuseteilen ausschließlich eine stoffschlüssigeVerbindung.

Erfindungsgemäß geht diese stoffschlüssige Verbindung auf den Einsatz eines Schmelzklebstoffs zurück, aus dem die umlaufende Dichtung gebildet wurde. Es ist entsprechend bevorzugt, dass die in dem Dichtungsbereich angeordnete umlaufende Dichtung einen erkalteten Schmelzklebstoff zumindest umfasst, gegebenenfalls auch aus einem solchen besteht.

Besonders bevorzugt umfasst die umlaufende Dichtung einen Träger, der mit dem erkalteten Schmelzklebstoff beschichtet ist. Bei diesem Träger kann es sich insbesondere um eine Kunststofffolie oder um ein Spritzgussteil handeln. Besonders bevorzugt bestehen die Kunststofffolie oder das Spritzgussteil aus einem Polymer, dessen Schmelz- oder Zersetzungspunkt oberhalb der Schmelztemperatur des Schmelzklebstoffs liegt.

Als Schmelzklebstoffe lassen sich bekanntlich eine Vielzahl lösungsmittelfreier und bei Raumtemperatur fester Polymere oder Polymermischungen einsetzten. Besonders geeignet sind vorliegend zellchemiestabile Polymere, welches nach dem Aufschmelzen und anschließenden Abkühlen eine chemische und/oder physikalische Bindung mit der Oberfläche der Gehäuseteile eingehen und das Metallgehäuse sicher abdichten.

Besonders geeignete Schmelzklebstoffe basieren auf Polyamid, Polyethylen, Polypropylen oder Polyphenylensulfid. Ein besonders geeignetes Trägermaterial ist PEEK (Polyetheretherketon).

Die beschriebene Miniaturbatterie lässt sich nach dem nachfolgend beschriebenen erfindungsgemäßen Verfahren herstellen. Dieses zeichnet sich insbesondere durch eine besondere Vorgehensweise bei der Abdichtung ihres Gehäuses aus. An Stelle des aus dem Stand der Technik bekannten Bördelns ist es lediglich erforderlich, in Kontakt mit den Gehäuseteilen eine Dichtung aus einer Schmelze herzustellen.

Erfindungsgemäß wird zur Ausbildung der Dichtung ein Schmelzklebstoff erst aufgeschmolzen und dann einem Abkühlvorgang unterzogen, bei dem er unter Ausbildung einer stoffschlüssigen Verbindung zu den Gehäuseteilen erkaltet.

Erfindungsgemäß erfolgt die Bildung der Dichtung auf dem folgenden Weg:
- Zur Ausbildung der Dichtung wird der Schmelzklebstoff in einem ersten Schritt in Kontakt mit einer nach Abschluss des Verfahrens an den Dichtungsbereich angrenzenden Fläche eines der beiden Gehäuseteile gebracht, aufgeschmolzen und einem Abkühlvorgang unterzogen, bei dem er unter Ausbildung einer stoffschlüssigen Verbindung zu dem Gehäuseteil erkaltet.
- In einem zweiten Schritt wird das Gehäuse aus dem Gehäuseteil mit dem erkalteten Schmelzkleber und dem anderen der beiden Gehäuseteile zusammengesetzt.
- In einem dritten Schritt wird der Schmelzkleber ein zweites Mal aufgeschmolzen und einem Abkühlvorgang unterzogen, dieses Mal unter Ausbildung einer stoffschlüssigen Verbindung zu dem anderen der beiden Gehäuseteile.

In allen Ausführungsformen des erfindungsgemäßen Verfahrens wird das Metallgehäuse zum Aufschmelzen des Schmelzklebstoffs induktiv erwärmt.

Induktives Erwärmen elektrisch leitfähiger Körper ist ein bekannter Vorgang, bei dem Metalle durch in ihnen erzeugte Wirbelstromverluste bei in der Regel hohem Wirkungsgrad erwärmt werden. Vorliegend wird das Metallgehäuse durch in ihm erzeugte Wirbelströme erwärmt. Das erwärmte Metallgehäuse erhitzt dann wiederum den Schmelzklebstoff bis dieser aufschmilzt.

Es ist bevorzugt, dass das Metallgehäuse erst nach abgeschlossener Ausbildung der Dichtung, das heißt nach dem Aufschmelzen des Schmelzklebstoffs, mit einem flüssigen Elektrolyt befüllt wird. Dadurch wird u.a. vermieden, dass beim Aufschmelzen des Schmelzklebstoffs vom Elektrolyt umfasstes Lösungsmittel verdampfen kann. Dies ist insbesondere dann wichtig, wenn es sich bei der herzustellenden Miniaturbatterie um eine Miniaturbatterie auf Lithium-Ionen-Basis handelt. Batterien auf Lithium-Ionen-Basis enthalten in aller Regel einen brennbaren organische Bestandteile umfassenden Elektrolyten, beispielsweise eine Mischung organischer Carbonate als Lösungsmittel.

Gemäß der Erfindung herstellbare Miniaturbatterien weisen in bevorzugten Ausführungsformen eine verschlossene Öffnung in ihrem Metallgehäuse auf, durch die sie nach der Ausbildung der Dichtung mit Elektrolyt befüllt wurden. Bevorzugt befindet sich diese Öffnung im Boden- oder im Deckelteil des Metallgehäuses. Der Verschluss der Öffnung kann beispielsweise mittels eines Klebe- oder Siegelpads erfolgen. Gegebenenfalls erfolgt der Verschluss auch erst nach der Formation der Miniaturbatterie.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen schematisch:
Figur 1 eine Illustration einer Ausführungsform einer gemäß dem erfindungsgemäßen Verfahren herstellbaren Miniaturbatterie in einer Draufsicht von vorne (A), von oben (B) und von unten (C) sowie im Querschnitt (D); und
Figur 2 eine Illustration einer Ausführungsform eines Verfahrens gemäß der Erfindung.

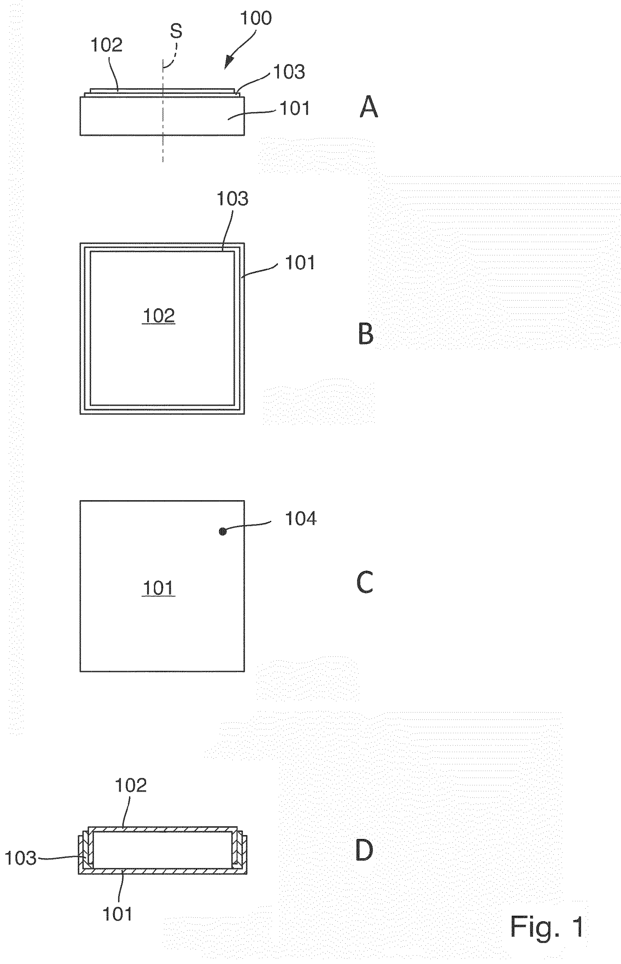

Fig. 1 zeigt die Miniaturbatterie in drei Ansichten sowie im Querschnitt. Die Miniaturbatterie umfasst das metallische Gehäuseteil 101 und das metallische Gehäuseteil 102. Beide Gehäuseteile 101 und 102 sind becherförmig und zwar jeweils mit quadratischer Grundfläche ausgebildet. An einen quadratischen Becherboden schließen sich jeweils vier rechteckige Seitenwände von jeweils identischer Größe an, wobei die Seitenwände nach unten hin durch den jeweiligen Becherboden und nach oben hin durch einen umlaufenden Öffnungsrand mit quadratischer Geometrie begrenzt werden.

Das Gehäuseteil 102 ist mit dem umlaufenden Öffnungsrand voran in das Gehäuseteil 101 eingeschoben. Die Seitenwände der Gehäuseteile 101 und 102 überlappen und schließen einen umlaufenden Spalt ein. In diesem Spalt, der als Dichtungsbereich fungiert, ist die umlaufende Dichtung 103 angeordnet. Dieser besteht aus einem erkalteten Schmelzklebstoff und verbindet die Gehäuseteile 101 und 102 stoffschlüssig.

Auf der Außenseite des Bodens des Gehäuseteils 101 findet sich die Öffnung 104. Durch diese kann die Miniaturbatterie mit Elektrolyt befüllt werden.

Die Miniaturbatterie umfasst diverse Funktionsteile im Inneren des aus den Gehäuseteilen 101 und 102 gebildeten Gehäuses. Diese sind aus Gründen der Übersichtlichkeit hier nicht dargestellt.

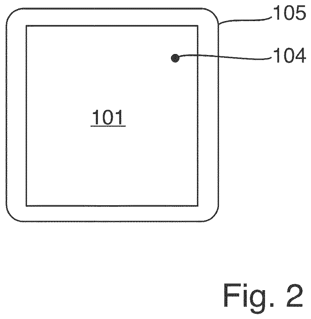

Fig. 2 illustriert eine Ausführungsform des erfindungsgemäßen Verfahrens. Dargestellt ist eine Vorstufe der in Fig. 1 dargestellte Batterie. Zur Ausbildung der Dichtung 103 wurde in den von den Seitenwänden der Gehäuseteile 101 und 102 gebildeten Spalt eine Folie aus einem Schmelzklebstoff angeordnet. Mittels der Induktionsschleife 105 werden die Randbereiche des Gehäuseteils 101 erwärmt, bis die in dem Spalt angeordnete Folie schmilzt. Anschließend lässt man die Schmelze erkalten.

In Abhängigkeit der verwendeten Funktionsteile kann es erforderlich sein, mit den Elektroden verbundene separate elektrische Leiter oder nicht mit Elektrodenmaterial bedeckte Abschnitte von Stromkollektoren elektrisch mit den Gehäuseteilen zu verbinden, vorzugsweise durch Verschweißung. Bevorzugt erfolgt dies ebenfalls vor dem Befüllen des Gehäuses mit Elektrolyt, gegebenenfalls sogar vor dem Einschieben des ersten Gehäuseteils in das zweite.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfindung sowie anhand der Zeichnung. Hierbei zeigen schematisch:
Figur 1 eine Illustration einer Ausführungsform einer gemäß dem erfindungsgemäßen Verfahren herstellbaren Miniaturbatterie in einer Draufsicht von vorne (A), von oben (B) und von unten (C) sowie im Querschnitt (D); und
Figur 2 eine Illustration einer Ausführungsform eines Verfahrens gemäß der Erfindung.
Fig. 1 zeigt die Miniaturbatterie in drei Ansichten sowie im Querschnitt. Die Miniaturbatterie umfasst das metallische Gehäuseteil 101 und das metallische Gehäuseteil 102. Beide Gehäuseteile 101 und 102 sind becherförmig und zwar jeweils mit quadratischer Grundfläche ausgebildet. An einen quadratischen Becherboden schließen sich jeweils vier rechteckige Seitenwände von jeweils identischer Größe an, wobei die Seitenwände nach unten hin durch den jeweiligen Becherboden und nach oben hin durch einen umlaufenden Öffnungsrand mit quadratischer Geometrie begrenzt werden.

Das Gehäuseteil 102 ist mit dem umlaufenden Öffnungsrand voran in das Gehäuseteil 101 eingeschoben. Die Seitenwände der Gehäuseteile 101 und 102 überlappen und schließen einen umlaufenden Spalt ein. In diesem Spalt, der als Dichtungsbereich fungiert, ist die umlaufende Dichtung 103 angeordnet. Dieser besteht aus einem erkalteten Schmelzklebstoff und verbindet die Gehäuseteile 101 und 102 stoffschlüssig.

Auf der Außenseite des Bodens des Gehäuseteils 101 findet sich die Öffnung 104. Durch diese kann die Miniaturbatterie mit Elektrolyt befüllt werden.

Die Miniaturbatterie umfasst diverse Funktionsteile im Inneren des aus den Gehäuseteilen 101 und 102 gebildeten Gehäuses. Diese sind aus Gründen der Übersichtlichkeit hier nicht dargestellt.

Fig. 2 illustriert eine Ausführungsform des erfindungsgemäßen Verfahrens. Dargestellt ist eine Vorstufe der in Fig. 1 dargestellte Batterie. Zur Ausbildung der Dichtung 103 wurde in den von den Seitenwänden der Gehäuseteile 101 und 102 gebildeten Spalt eine Folie aus einem Schmelzklebstoff angeordnet. Mittels der Induktionsschleife 105 werden die Randbereiche des Gehäuseteils 101 erwärmt, bis die in dem Spalt angeordnete Folie schmilzt. Anschließend lässt man die Schmelze erkalten.

## Patentansprüche

1. Verfahren zur Herstellung einer sekundären Miniaturbatterie mit einer Kapazität < 1000 mAh mit den Merkmalen
a. Sie umfasst ein Metallgehäuse aus zwei metallischen Gehäuseteilen (101; 102).
b. das Metallgehäuse ist prismatisch ausgebildet, und
c. zwischen den zwei metallischen Gehäuseteilen (101; 102) ist in einem Dichtungsbereich eine umlaufende Dichtung (103) angeordnet, die die Gehäuseteile (101; 102) elektrisch voneinander isoliert,
wobei
d. zur Ausbildung der Dichtung (103) ein Schmelzklebstoff aufgeschmolzen wird, und der Schmelzklebstoff einem Abkühlvorgang unterzogen wird, bei dem er unter Ausbildung einer stoffschlüssigen Verbindung zu den Gehäuseteilen (101; 102) erkaltet, und
e. zum Aufschmelzen des Schmelzklebstoffs das Metallgehäuse induktiv erwärmt wird,
**dadurch gekennzeichnet, dass**
f. zur Ausbildung der Dichtung (103) der Schmelzklebstoff in einem ersten Schritt in Kontakt mit einer nach Abschluss des Verfahrens an den Dichtungsbereich angrenzenden Fläche eines der beiden Gehäuseteile gebracht, aufgeschmolzen und einem Abkühlvorgang unterzogen wird, bei dem er unter Ausbildung einer stoffschlüssigen Verbindung zu dem Gehäuseteil erkaltet.
g. In einem zweiten Schritt das Gehäuse aus dem Gehäuseteil mit dem erkalteten Schmelzkleber mit dem anderen der beiden Gehäuseteile zusammengesetzt wird.
h. In einem dritten Schritt der Schmelzkleber ein zweites Mal aufgeschmolzen und einem Abkühlvorgang unterzogen wird, dieses Mal unter Ausbildung einer stoffschlüssigen Verbindungzu dem anderen der beiden Gehäuseteile.

2. Verfahren nach Anspruch 1 mit dem folgenden zusätzlichen Merkmal:
a. Das Metallgehäuse wird nach abgeschlossener Ausbildung der Dichtung (103) mit einem flüssigen Elektrolyt befüllt.

## Claims

1. Method for producing a secondary miniature battery with a capacity < 1000 mAh, having the following features:
a. the battery comprises a metal casing composed of two metallic casing parts (101; 102),
b. the metal casing has a prismatic construction, and
c. disposed between the two metallic casing parts (101; 102) in a sealing region is an all-round seal (103) which isolates the casing parts (101; 102) electrically from one another,
where
d. to form the seal (103), a hot-melt adhesive is melted, and the hot-melt adhesive is subjected to a cooling operation in which it cools to form a cohesive bond to the casing parts (101; 102), and
e. to melt the hot-melt adhesive, the metal casing is heated inductively,
**characterized in that**
f. to form the seal (103), the hot-melt adhesive in a first step is contacted with an area of one of the two casing parts that borders the sealing region after the end of the method, is melted and is subjected to a cooling operation in which it cools to form a cohesive bond to the casing part;
g. in a second step, the casing is assembled from the casing part with the cooled hot-melt adhesive and the other of the two casing parts;
h. in a third step, the hot-melt adhesive is melted a second time and subjected to a cooling operation, this time to form a cohesive bond to the other of the two casing parts.

2. Method according to Claim 1, having the following additional feature:
a. after the seal (103) has been formed, the metal casing is filled with a liquid electrolyte.

## Revendications

1. Procédé de fabrication d'une batterie secondaire miniature d'une capacité < 1000 mAh qui comporte les caractéristiques suivantes :
a. elle comprend un boîtier métallique pourvu de deux parties de boîtier métalliques (101 ; 102),
b. le boîtier métallique est prismatique, et
c. une garniture d'étanchéité circonférentielle (103), qui isole électriquement les parties de boîtier (101 ; 102) l'une de l'autre, est disposée dans une région d'étanchéité entre les deux parties de boîtier métalliques (101 ; 102),
d. un adhésif thermofusible étant fondu pour former la garniture d'étanchéité (103), et l'adhésif thermofusible étant soumis à un processus de refroidissement lors duquel il refroidit tout en formant une liaison de matière avec les parties de boîtier (101 ; 102), et
e. le boîtier métallique étant chauffé par induction pour faire fondre l'adhésif thermofusible,
**caractérisé en ce que**
f. pour former la garniture d'étanchéité (103), dans une première étape, l'adhésif thermofusible est mis en contact avec une surface de l'une des deux parties du boîtier, laquelle surface est adjacente à la région d'étanchéité une fois le procédé terminé, il est fondu et il est soumis à un processus de refroidissement lors duquel il refroidit tout en formant une liaison de matière avec la partie de boîtier,
g. dans une deuxième étape, le boîtier est réalisé par assemblage de la partie de boîtier, pourvue de l'adhésif thermofusible refroidi, avec l'autre des deux parties de boîtier,
h. dans une troisième étape, l'adhésif thermofusible est fondu une deuxième fois et soumis à un processus de refroidissement, cette fois-ci en formant une liaison de matière avec l'autre des deux parties de boîtier.

2. Procédé selon la revendication 1 comprenant la caractéristique supplémentaire suivante :
a. une fois la garniture d'étanchéité (103) formée, le boîtier métallique est rempli d'un électrolyte liquide.
